# EUROPEAN PATENT APPLICATION

(11) **EP 4 478 590 A1**
(43) Date of publication of application: **18.12.2024**
(21) Application number: 23179695.4
(22) Date of filing: 16.06.2023
(51) Int. Cl.: H02K 15/14, H02K 5/04, B23K 33/00

(54) **CONNECTOR ARRANGEMENT**

(71) Applicant: ABB SCHWEIZ AG, 5400 Baden (CH)
(72) Inventor: Palokangas, Pekka, 00380 Helsinki (FI); Mäkinen, Antti, 00380 Helsinki (FI)
(74) Representative: Kolster Oy Ab

(57) **Abstract**

The present disclosure relates to a connector (16) for connecting a housing (12) of a stator and an end structure (14) thereof, the connector (16) comprising a head portion (18), the head portion (18) comprising a surface (26) configured to be welded to the one of the housing (12) and the end structure (14) in use, the head portion surface (26) extending in at least two dimensions. The connector comprises a body portion (3) comprising an elongate form, and comprising at least one arm (34) extending transversely therefrom, the arm (34) comprising a surface (38) configured to be welded to the other of the housing (12) and the end structure (14) in use.

## Description

The present disclosure relates to a system and method of connecting a stator housing and an end structure, in particular, for a motor, generator or turbine.

### Background of the Invention

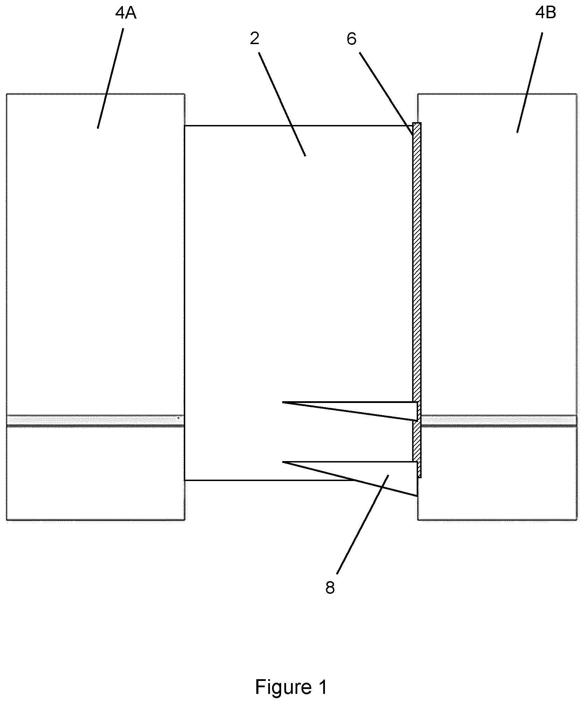

A prior generator art is shown schematically in figure 1. A stator assembly 2 comprises end frames 4A,4B. The stator 2 is connected to an end frames 4A,4B via a welding ring 6. The welding ring 6 is welded to the stator 2 and the end frames 4A,4B to provide a connection therebetween. During use, the stator receives a torque force, thus inducing circumferential stresses in the housing. Similarly, axial or radial stresses may occur due to vibrations or loads attached to the generator.

The inventor has found numerous problems with such prior art arrangements. During the welding process, the welding ring 6 and/or the filler melts and rehardens. This process is partially uncontrolled, and so the material characteristics of the weld metal are unknown. Typically, the weld material becomes more brittle, thus increasing the likelihood of fatigue of the joint due to vibrations in operation of the generator. This may be remedied by increasing the thickness of the stator or end frame, or increasing weld strength, however, such arrangements typically increase cost, complexity or weight etc.

In some prior art arrangements, fins or webs 8 are added to help relieve stress at the weld, thereby mitigating some of the risk of the inherent weakness at the welds. However, this in turn increases stress in the fin 8, and thus the fins 8 are susceptible to fatigue damage themselves. Additionally, the fins 8 may act as stress concentrators, increasing the risk of fatigue at the welds connecting the fins 8 to the stator 2.

The present invention aims to overcome or ameliorate one or more of the above problems, in particular, to improve fatigue resistance between a stator assembly and an end structure.

### Statement of Invention

According to a first aspect there is provided: a connector for connecting a housing of a stator and an end structure thereof, the connector comprising: a head portion, the head portion comprising a surface configured to be welded to the one of the housing and the end structure in use, the head portion surface extending in at least two dimensions; a body portion comprising at least one arm extending transversely therefrom, the arm comprising a surface configured to be welded to the other of the housing and the end structure in use.

The head portion surface may be curved and/or comprise two or more portions angled relative to one another. The head portion may be arrow or anchor shaped. The head portion surface may be convex. The body portion may be elongate.

The head portion surface may comprise one or more linear portion. The linear portions may be connected to one another by a curved transition. The head portions surface may be polygonal.

The head portion may comprise one or more head arm. The head portion surface may be defined at least partially by the head arm. A recess or cutout may be provided between the head portion and the head arm.

The head portion may be upstanding from the body portion. The head portion extends transversely to the body portion. The head portion may be perpendicular to the body portion (i.e. in either transverse or upstanding direction). The head portion may be connected to the body portion by a curved portion.

The connector may comprise a plurality of head portions. The connector may comprise between 1 and 10 head portions, preferably, between 2 and 5.

The arm may be provided at an end of the body portion. An arm may be provided at both ends of the body portion. The arm surface may be angled relative to the elongate body. The arm surface may be perpendicular to the elongate body. The arm surface may be provided at an outer or end surface of the body.

The connector may comprise a plurality of body portions. The respective body portions may be connected via a bridge portion. The bridge portion may be configured to extend around the arm. The arm may be at least partially enclosed/surrounded by the bridge portion. The bridge portions may enclose arms at respective ends of adjacent body portions.

A gap or recess may be provided between the bridge portion and the arm. The gap or recess may be provided between the bridge portion and a lateral end and/or inner surface of the arm.

The respective body portions may comprise an arm, and a space is provided between the arms.

The body may comprise a flange extending transversely therefrom. The flange may comprise one or more surface to provide a weld to the housing or end structure in use. The flange or flange surface may extend parallel to the body portion. The flange surface may extend transversely/perpendicular to the body portion. A cutout or recess may be provided between the body portion and flange.

The body portion may be planar. The weld surfaces may be provided at a lateral end or side of the connector. One or more body portions may be welded or fastened to one another. The connector may comprise a single/unitary piece.

The body arms may comprise a plurality of surfaces to provide a weld to the housing or end structure in use. The weld surface may be provided on an outer and inner facing surface of the arm. The weld surfaces may be angled relative to one another.

According to a further aspect, there is provided: a motor, generator or turbine comprising the connector of the first aspect.

The stator housing comprises one or more support beam. The body may be mounted on or adjacent the beam and/or extending parallel thereto. The housing may comprise a sheet, tube or cylinder mounted to the beam. One or more welds or fasteners between the sheet/tube/cylinder and the beam may be located the space between the arms.

The body portion may be curved or angled to conform to the shape to the housing. The curved may be provided in the plane of body portion. The body portion may extend a circumferential direction of the stator housing. The head portion may extend in an axial and/or radial direction.

According to a further aspect there is provided: a method of connecting a housing of a stator and an end structure thereof, comprising: providing a connecter having a head portion, the head portion comprising a surface extending in at least two dimensions and a body portion comprising at least one arm extending transversely therefrom, the arm comprising a surface; and welding the head surface to one of the housing and the end stator and welding the arm surface to the other of the housing the end stator.

Any aspect of the invention may be combined with any other aspect of the invention where practicable.

### Description

Embodiments of the present invention are described below, by way of example only, with reference to the accompanying drawings:
**Figure 1** shows a prior art connector arrangement;
**Figure 2** shows a perspective view of a connector arrangement mounted to a generator;
**Figure 3** shows a side view of the connector arrangement mounted to the generator;
**Figure 4** shows a perspective view of the connector arrangement;
**Figure 5** shows a perspective view of the connector arrangement welded to the generator;
**Figure 6** shows a perspective view of the generator under load in a computational model;
**Figure 7** shows a perspective view of a second embodiment of the connector arrangement;
**Figure 8** shows a perspective view of a third embodiment of the connector arrangement;
**Figure 9** shows a perspective view of a fourth embodiment of the connector arrangement;
**Figure 10** shows a perspective view of a fifth embodiment of the connector arrangement.

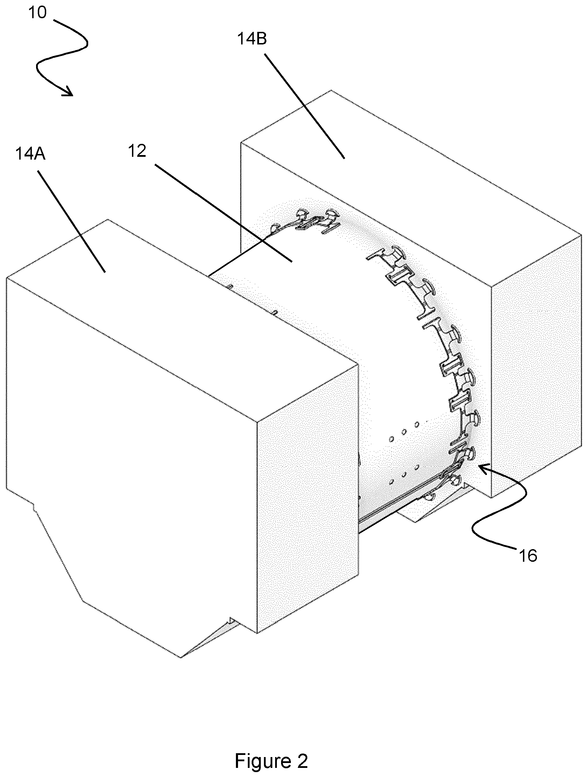

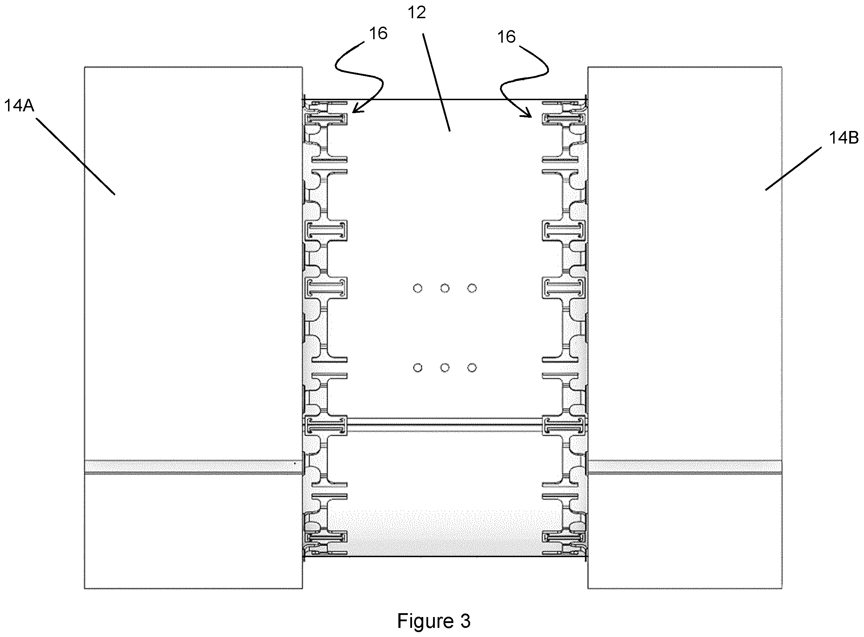

A generator arrangement 10 is shown in figures 2 and 3. The generator 10 comprises a stator housing 12. The housing 12 is configured to support and/or enclose a stator (not shown). The housing 12 is generally cylindrical (i.e. a comprises a circular cross-section). However, the housing 12 may comprises any suitable shape or profile, for example, ovate or polygonal.

The generator 10 comprises end frames 14A,14B. The end frames generally support and/or provide a means to mount the generator 10 in use. The end frames 14A,14B may comprise a framework or the like. Again, it can be appreciated that the exact form/shape of the frames 14A,14B is not pertinent to the invention at hand.

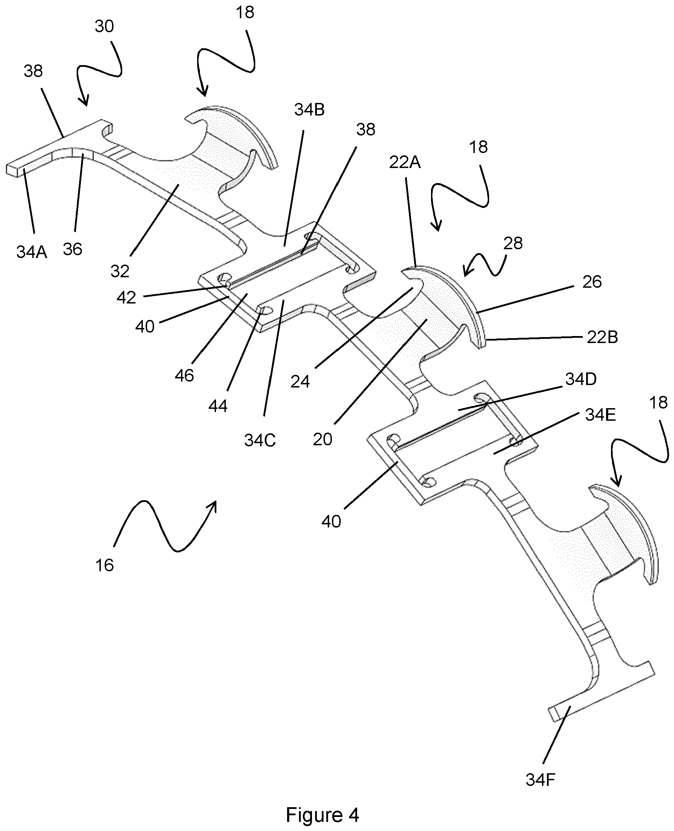

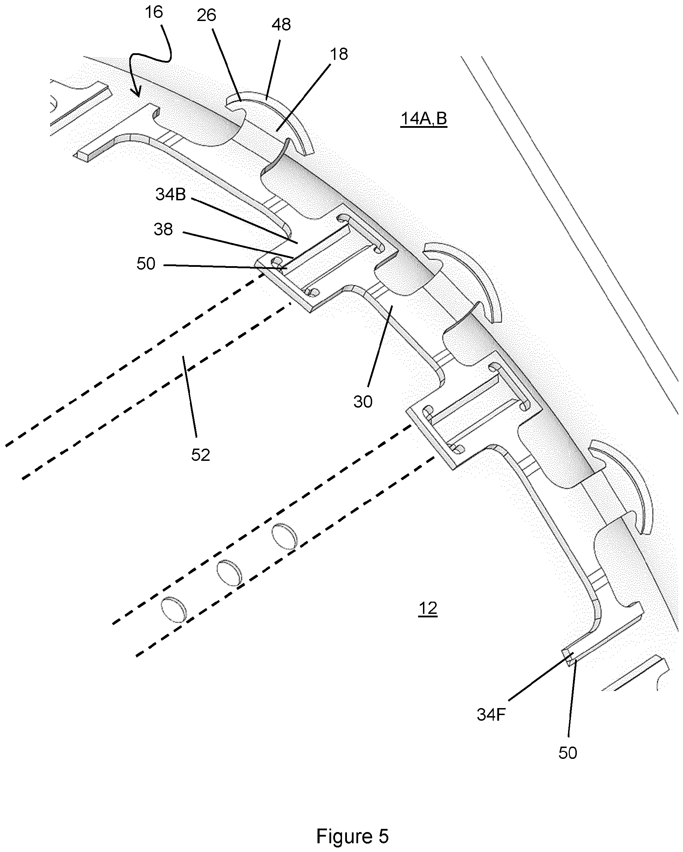

A connector arrangement 16 is configured to connect stator housing 12 to one or both the end frames 14A, 14B. The connector 16 is shown in closer detail in figures 4 and 5. The connector 16 comprises a head portion 18. The head portion comprises a central portion 20. Arms 22A,22B extend laterally outward from the central portion 20. The arms 22A,22B are curved to form a hook or U-shape. A recess 24 is defined between the arms 22A,22B and central portion 20.

An outer surface 26 is defined between the two arms 22A,22B (i.e. spans therebetween). The outer surface 26 defines an end 28 of the head 18. The outer surface 26 is curved. The curve surface 26 is convex. The outer surface 26 thus extends of faces toward two orthogonal dimensions. The head portion 20 is anchor or mushroom shaped. The head 18 extends in an axial direction in use.

The connector 16 comprises a body portion 30. The body 30 is generally elongate. The body 30 extends in circumferential direction in use. The body 30 extends in a direction perpendicular to the head 18. The head 18 thus extends transversely/outwardly from the body 30. The body 30 is curved to match the circumferential curved of the stator housing 12 accordingly. Where the housing 12 comprises a non-circular (e.g. polygonal) shape, the body 30 is shaped accordingly.

The head 18 is connected to body 30 via the central portion 20 thereof. The central portion 20 extends in a radially outward direction. Typically, the central portion 20 is curved to help prevent stress concentrations. The head portion 18 thus extends in both a radially outward and axial direction. The plane of the head portion 18 may be perpendicular to the plane of the body 30. Where the housing 12 is non-perpendicular to the end frames 14A,14B, the relative angle between the head 18 and the body 30 can be adjusted accordingly.

The body 30 comprises a central portion 32. The central portions 32 is generally rectangular. Arms 34A,34B are provided at the respective ends 32 of the central portion. The arm 34A,34B extends transversely (i.e. in an axial direction) from the central portion 32. The arms 34A,34B and central portions 32 provide an I-shape arrangement. Curved transitions 36 are provided between the arms 34A,34B and the central portion 32.

The arms 34A,34B comprise an end surface 38. The end surface 38 faces outwardly (i.e. in the circumferential direction). The arms 34A,34B are substantially linear. The end surface 38 is linear accordingly.

The connector 16 comprises a plurality of heads 18. Each head 18 comprises a body portion 30 and plurality of arms 34A-F accordingly. The respective head 18 and body portions 30 are united by a bridge portion 40 to provide a continuous piece. The bridge 40 extends from a side of the arm 34B facing the head 18. The bridge 40 is connected to an adjacent arm 34C in a similar fashion. The bridge 40 is C-shaped. The bridge 40 is therefore spaced from a lateral side end 42 of the arms 34B,34C.

A recess 44 or undercut is provided between the ends 42 of the arms 34B,34C and the bridge portion 40. This allows the arms 34B,34C to accommodate stress in use, without incurring excessive stresses in the bridge portion 40. A bridge portion 40 is provided at each lateral end 42 of the arms 34B,34C. The bridge portion 40 thus encloses the arms 34B,34C. The adjacent arms 34B,34C are spaced from one another. An aperture 46 is defined between the arms 34B,34C and the bridge 40. This allows access to the outer surfaces 38 of the arms 34B,34C. A similar bridge portion 40 is configured to connect arms 34D,34E. It can be appreciated that such an arrangement can be used ad infinitum to connect as many body portions 30 as required. In general, providing multiple head/body portions allows a greater distribution of stress, thereby increasing fatigue resistance. In some embodiments, a single body/head portion may be provided.

The connector 16 comprises a single/unitary/integral piece. The connector 16 may be manufactured using any suitable technique, for example, stamping. The connector 16 may be deformed (i.e. bent) into the appropriate shape. The connector 16 typically comprises metallic material, for example, steel.

The connector 16 is shown provided on the generator 10 in figure 5. The head portion 18 is connected to the end frame 14A,B. A weld 48 is provided between the outer surface 26 and the end frame 14A,B. The weld 48 typically comprises a fillet weld. The weld 48 follows the shape of the outer surface 26. The weld 48 is therefore curved/arcuate. The weld 48 thus extends in two dimensions (i.e. the circumferential and the radial directions). The weld 48 can therefore more easily accommodate stresses in those directions. For example, if the arms 22A,22B were straight, circumferential stress would be concentrated at the ends of the arms, and therefore concentrated at the ends of the weld 48, thus increasing the likelihood of fatigue thereof. The curved 22A,22B further increase the effective weld 48 length, again reducing stress concentrations.

The end surfaces 38 of the body arms 34A,34B are connected to the stator housing 12. The end surfaces 38 are connected via a weld 50. The weld 50 comprises a fillet weld. The weld 50 is linear. It can be appreciated that welds 48,50 are provided for each of the heads 18 and body arms 34A-F.

The stator housing 12 may comprise a sheet or tubular form. The sheet is supported by struts or beams 52 provided therein. The housing 12 may be welded (e.g. spot welded), fastened, or otherwise affixed to the beams. The welds 50 on the body portion 30 are provided on/above or adjacent the beams 52. Loads from the connector 16 are therefore at least partially transferred to the beam 52, rather than directly to the housing 12. The connector 16 is therefore supported by the beams 52. The aperture 46 provided between the body arms 34A,34B additionally allows space for a weld/fastener connecting the housing 12 to the beams 52. This prevents the connector 16 from interfering or providing additional stresses to the weld/fastener. As load force are more effectively transferred to the beams 52, smaller beams may be used as extra strength is not required to compensate for unpredictable loading conditions. For example, 20mm wide beam may be used instead of a 60mm one.

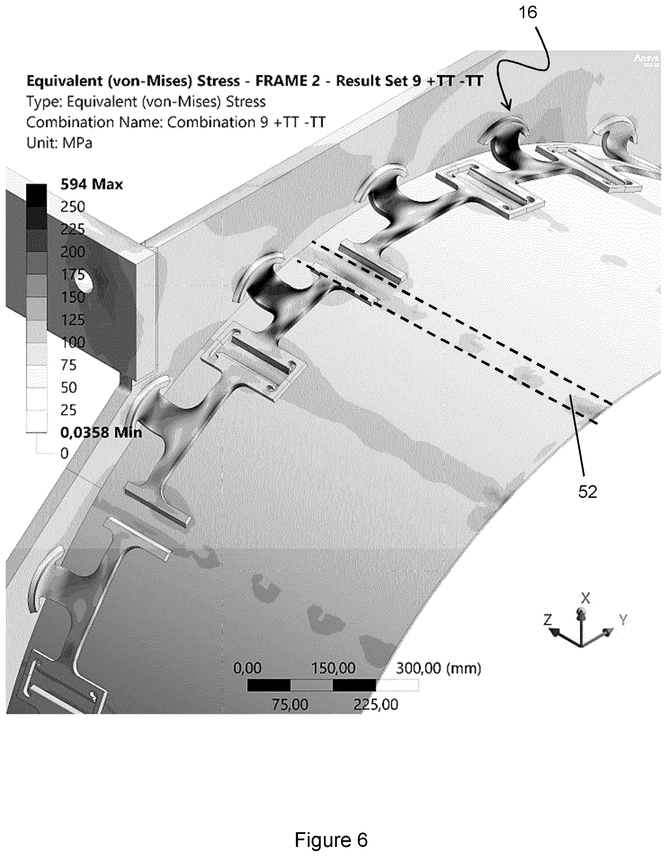

As seen in figures 5 and 6, a plurality of connectors 16 are provided about the housing 12. The connectors 16 are provided circumferentially about the housing 12. Typically, the connectors 16 will extend about the whole circumference of the housing 12. In some embodiments, the one or more connectors may extend about only a portion of the housing 12 (for example, where some other support structure is provided). In some embodiments, a single connector 16 may be provided (i.e. one which extends about the whole circumference). However, it can be appreciated that provision of multiple smaller connectors 16 allows for easier manufacture and/or assembly.

The connectors 16 are spaced apart from one another such that the end of connectors 16 are welded on or adjacent a beam 52 (i.e. in the same fashion as the welds 50 adjacent the bridge 40).

In the embodiment shown in figure 5, the housing 12 and frame 14 abut another. In other embodiments, a space or gap may be provided between the housing 12 and 14 to allow easier assembly thereof (i.e. to provide some tolerance). The majority of the stress between the housing 12 and the frame 14 are therefore accommodated by the connector 16.

A computational model of the connector 16 and the generator 10 is shown in figure 6 to demonstrate stresses in the system during typical use. It can be appreciated that the model shown is merely an example to aid with understanding of the invention, and the specific arrangement and the value of determined stresses is exemplary accordingly. It can be seen that the highest stresses (i.e. the darkest area) are concentrated in the central portions 20,32 of the connector 16. The highest stresses are therefore generally provided in the connector 16 itself, rather than the welds 48,50. Given manufacture and material properties of the connector 16 can be more easily controlled (e.g. relative to in situ welds), than the structural and fatigue properties of the system can be more accurately controlled. It can also be seen that loads transferred from the connector 16 are transferred to the beam 52 areas, thus reducing loads experienced by the relative weak sheet of the stator housing 12. The relatively long axial length of the arms 34A-F help to transfer load onto the beams 52.

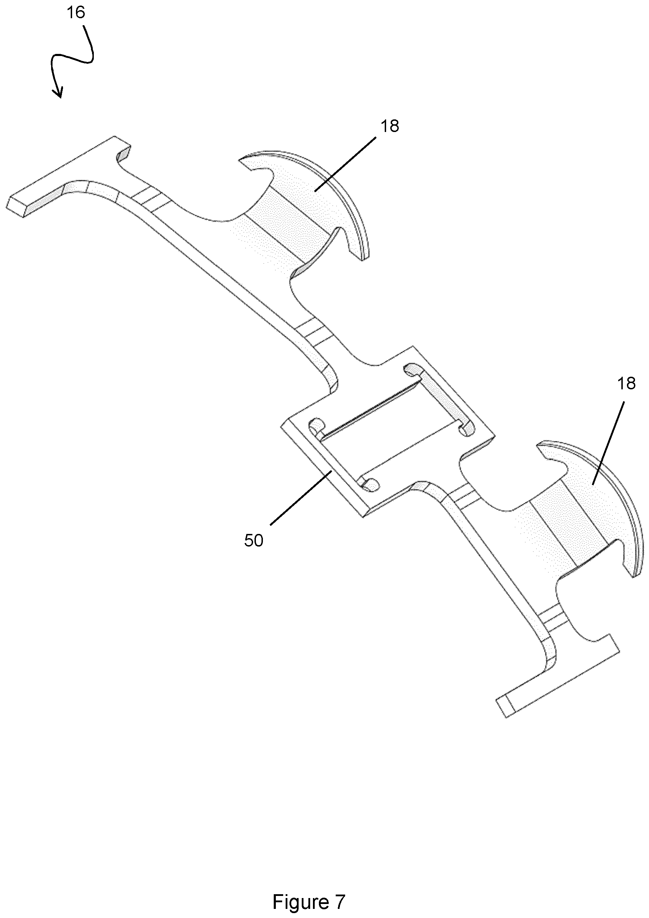

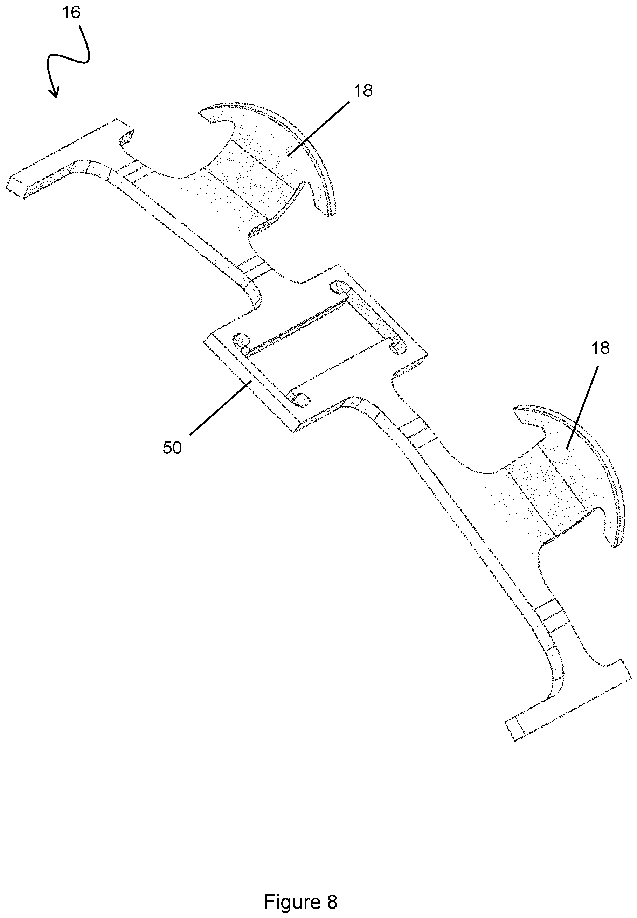

Further embodiments of the connector 16 are shown in figures 7 and 8. These embodiments are substantially the same as the previous embodiments, and like features will not be described in detail. In these embodiments, only two head portions 18 are provided. Along with previous embodiments, the bridge portion 50 may be provided close to one head portion 18 then the other. The bridge portion 50 is therefore offset from a centre-point between the heads 18. This arrangement is provided to ensure the welds 50 area aligned with the beams 52 in use. It can be appreciated that the exact positioning of the bridge 50 relative to the head portions 18 will be determined in accordance with the positions of the beams 52. As best seen in figure 6, the connector assembly will typically comprise a mixture of connectors 16 shown in figures 4, 7 and 8, depending on the exact configuration.

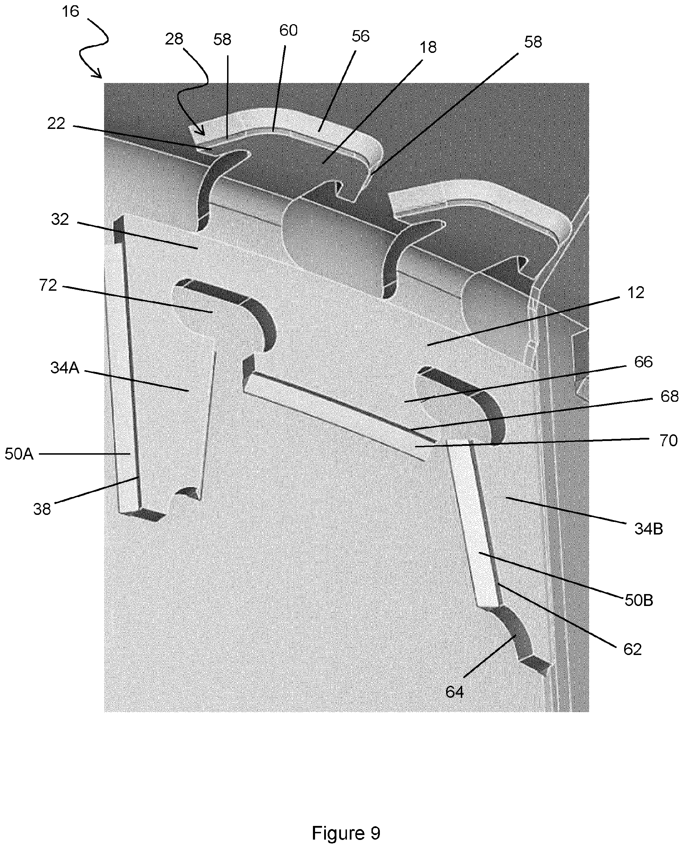

A further embodiment of the connector 16 is shown in figure 9. The outer surface 28 of the head portion 18 comprises discrete portions. A first discrete portion 56 is parallel/tangential to the circumferential direction in use (e.g. transverse to the direction of the head 18). Second portions 58 are angled relative to the first portion 56. The second portions 58 are provided on respective arms 22. The first portions 56 and second portions 58 are substantially linear. The first portion 56 is connected to the second portions 58 via curved transitions 60. In the present embodiment, the second portions 58 are angled relative to the first portion 56 by approximately 135 degrees. This allows the weld to accommodate stresses in two dimensions, as previously discussed. The second portions 58 may be angled relative to the first portion 56 by between 90 and 170 degrees. Two head portions 18 are provided.

The connector 16 comprises an elongate central portion 32. Arms 34A,34B are provided at the ends of the central portion 32. The arms 34A,34B extend transversely to the central portion 32 (i.e. the axial direction). A first weld is 50A provided on the end surface 38 as previously described. A second weld 50B is provided on an inner facing surface 62. The inner facing surface 62 is angled relative to the end surface 38. The inner facing surface 62 is angled relative to the end surface 38 by between 5 and 45 degrees. In the inner weld 50B therefore extends in an axial and circumferential direction (i.e. in two dimensions). A recess or cut-out 64 is provided adjacent the inner surface 62 and an end of the arm 34A,34B.

The central portion 32 comprises a flange 66. The flange 66 extends paralell to the central portion 32. The flange 66 is provided adjacent a centre of the central portion 32. The flange 66 comprises an end face 68. The end face 68 extends along the circumferential direction. A weld 70 is provided along the end face 68 to fixing the housing 12. The weld 70 provides secure fixing the connector 16 is the circumferential direction. Recesses 70 or cut-outs are provided between the flange 66 and the arms 34A,34B. The recesses 70 are curved to reduce stress concentrations.

The connector 16 in figure 9 may be affixed to the housing 12 as previously described. The outer arms weld 50A and inner arm welds 50B may span or be provided adjacent the beams 52. Alternatively, the outer welds 50A are adjacent the beam 52. The connector 16 is place about the circumference of the housing 12 in use. In some embodiments, the connector 16 is connected via a bridge portion. In some embodiments, the flange 66 may not be provided. In some embodiments, the flange 66 and associated weld 70 may be provided on the embodiments in figures 4, 7 or 8.

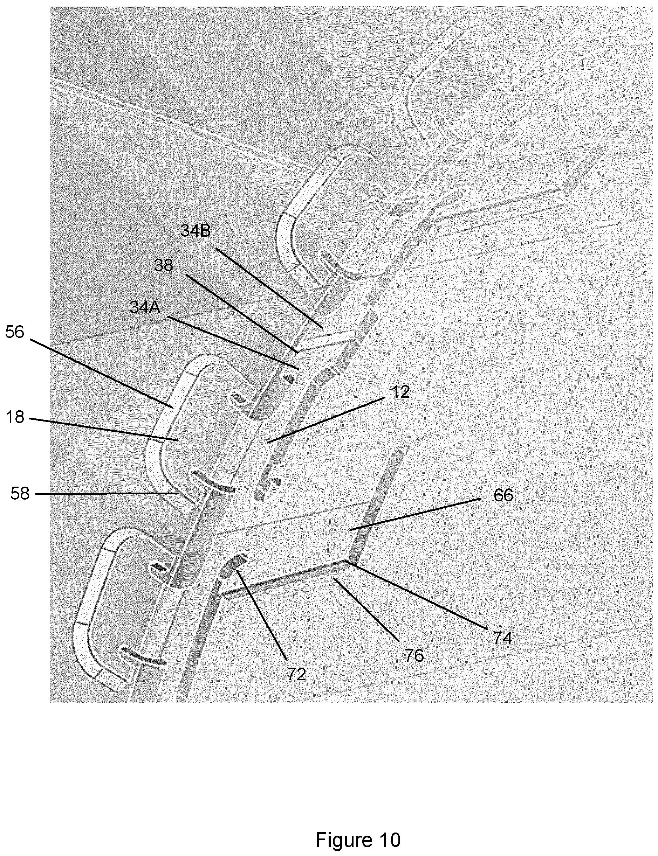

A further embodiment of the connector 16 is shown in figure 10. In this embodiment, the first portion 56 and second portion 58 of the head 18 are angled at 90 degrees relative one another.

Arms 34A,34B are provided at the end of the central portion 32. The arms 34A,34B extend transversely relatively little compared to previous embodiments. The end surface 38 is configured to be welded to the end surface of an adjacent connector.

A flange 66 is provided on the central portion 32. The flange 66 extends transversely relatively greater compared to the previous embodiment. The circumferential sides 74 of the flange 66 are configured to be welded to the housing 12 via a weld 76. The weld thus extends in an axial direction. The weld 76 may be provided on/adjacent a beam 52. Recesses 70 or cut-outs are provided between the flange 66 and the central portion 32.

The connector 16 is generally plate-like or planar. The connector 16 is therefore relative thin in one dimension. The welded surfaces 26,38,68,74 are provided on lateral sides or edges of the connector 16. Said sides or edges are relative thin accordingly.

In general terms, the head portion 18 provides a surface to allow welding to the frame in at least two dimensions. In the embodiments above, this is achieved by providing a curved surface or a surface having curved transitions. In other embodiments, head 18 may comprise angled or polygonal surfaces. However, it can be appreciated that a generally curved form reduces stress concentrations. In some embodiments, arms 22A,22B may not be provided, and the welded surface may be provided directly by the central portion 20 (e.g. the central portion tapers outwardly).

Similarly, the arms 34A,34B and flange 66 are generally configured to increase the effective weld length along the axial directions. The arms 34A,34B/flange 66 may extend in the axial direction and/or be placed at any position along the length of the body portion 30 are required. The 34A,34B/flange 66 may extend one both or either side of the body portion 30 (e.g. to provide an I or L shape configuration). Three or more arms 34A,34B may be provided on the body portion 30, for example, where extra strength is needed.

It can be appreciated that in some embodiments, the head 18 may be connected to the stator housing 12, and the body 30 is connected to the end frame 14.

The present arrangement provides a means to connect a housing portion of a stator to a frame assembly. The connector reduces or eliminates a directly welded connection between the housing and frame, thereby reducing the possibility of a fatigue induced failure thereof. The curved/angled shape of the head portion helps to distribute two dimensional stresses, and the elongate arms distribute stress along beams in the housing. The shape of the connector (e.g. the curved recesses or cut-outs) helps to reduce stress concentrations therein. The curved/elongate arms further increase the effective area of the welds, thus reducing stress concentrations therein.

The connector may be used in any suitable machine comprising a rotational portion having a housing, and an end frame or structure for supporting said housing. For example, the housing may house a stator portion of a generator, motor or turbine.

## Claims

1. A connector (16) for connecting a housing (12) of a stator and an end structure (14) thereof, the connector (16) comprising:
a head portion (18), the head portion (18) comprising a surface (26) configured to be welded to the one of the housing (12) and the end structure (14) in use, the head portion surface (26) extending in at least two dimensions;
a body portion (3) comprising an elongate form, and comprising at least one arm (34) extending transversely therefrom, the arm (34) comprising a surface (38) configured to be welded to the other of the housing (12) and the end structure (14) in use.

2. A connector according to claim 1, where the head portion surface (26) is curved and/or comprises two or more portions (56,58) angled relative to one another.

3. A connector according to any preceding claim, where the head portion (18) comprises one or more head arm (22), and the head portion surface (26) is defined at least partially by the head arm (22).

4. A connector according to any preceding claim, where the head portion (18) is upstanding from the body portion (30).

5. A connector according to any preceding claim, where the head portion (18) extends transversely to the body portion (30).

6. A connector according to any preceding claim, where the arm (34) is provided at an end of the body portion (30)

7. A connector according to any preceding claim, where the arm surface (38) is perpendicular to the body (30).

8. A connector according to any preceding claim, comprising a plurality of body portions (30), the respective body portions (30) connected via a bridge portion (40).

9. A connector according to claim 8, where the bridge portion (40) is configured to extend around the arm (34), such that the arm (34) is at least partially enclosed by the bridge portion (40).

10. A connector according to claim 8 or 9, where a gap (44) or recess is provided between the bridge portion (40) and the arm (34).

11. A connector according to any of claims 8-10, where the respective body portions (30) comprise an arm (34B,34C), and a space (46) is provided between the arms (34B,34C).

12. A motor, generator or turbine comprising the connector of any preceding claim.

13. A motor, generator or turbine according to claim 12, where stator housing (12) comprises one or more support beam (52), and the body arm (34) is mounted on or adjacent the beam (52) and extends parallel thereto.

14. A motor, generator or turbine according to claim 12 or 13, where the body portion (18) is curved or angled to conform to the shape to the housing (12).

15. A motor, generator or turbine according to any of claims 12-14, where the body portion (30) extends a circumferential direction of the stator housing (12), and the head portion (18) extends in an axial and/or radial direction.
